# EUROPÄISCHE PATENTSCHRIFT

(11) **EP 2 269 845 B1**
(45) Veröffentlichungstag und Bekanntmachung des Hinweises auf die Patenterteilung: **20.11.2013**
(21) Anmeldenummer: 10006840.2
(22) Anmeldetag: 02.07.2010
(51) Int. Cl.: B60D 1/64, B60R 16/00, H01R 13/46

(54) **Steckdose einer Anhängekupplung**
Drawbar coupling socket
Prise d'attelage

(30) Priorität: 03.07.2009 DE 102009031652
(43) Veröffentlichungstag der Anmeldung: 05.01.2011
(60) Teilanmeldung: 13004330.0
(73) Patentinhaber: WESTFALIA - Automotive GmbH, 33378 Rheda-Wiedenbrück (DE)
(72) Erfinder: Beutin, Jörg, 33332 Gütersloh (DE); Bloch, Oliver, 33775 Versmold (DE); Röscheisen, Daniel, 33378 Rheda-Wiedenbrück (DE)
(74) Vertreter: Bregenzer, Michael

(56) Entgegenhaltungen:
- EP-A2- 1 484 820
- WO-A1-03/071636
- DE-U1- 20 115 252
- DE-U1-202007 010 441
- NL-C2- 1 032 887
- US-A- 5 244 409
- US-A- 5 554 049
- US-A- 5 739 592
- US-A1- 2002 098 718
- US-A1- 2003 020 331

## Beschreibung

Die Erfindung betrifft eine Steckdose für eine Anhängekupplung für ein Kraftfahrzeug, mit in einem Steckdosengehäuse angeordneten Steckkontakten einer Steckkontakt-Anordnung zur Verbindung mit einem Anschlusskabel, das mit einem Bordnetz des Kraftfahrzeugs verbunden oder verbindbar ist, gemäß dem Oberbegriff des Anspruchs 1.

Eine derartige Steckdose ist aus DE 201 15 252 U1 bekannt.

Eine weitere Steckdose ist aus der Gebrauchsmusterschrift DE 295 05 471 U1 bekannt. Das Steckdosengehäuse der bekannten Steckdose ist zweiteilig. An einem vorderen, rückseitig offenen Steckdosengehäuse sind Steckanschlüsse zum Einstecken des anhängerseitigen Steckers vorhanden. An der Rückseite ist ein Zusatzgehäuse angeordnet, in dem eine Steuereinheit aufgenommen ist. Das Zusatzgehäuse mit der Steuerungseinrichtung und das Dosengehäuse mit den Steckanschlüssen sind an einander entgegengesetzten Seiten eines die Anschlussdose haltenden Halters angeordnet. Daraus resultieren unter anderem Dichtigkeitsprobleme. Die in der Steuereinheit enthaltenen elektrischen Komponenten, beispielsweise zum Anschluss an ein kraftfahrzeugseitiges Bussystem, sind vor Umwelteinflüssen, insbesondere Feuchtigkeit, nur unzulänglich geschützt.

Es ist daher die Aufgabe der vorliegenden Erfindung, eine Steckdose für eine Anhängekupplung für ein Kraftfahrzeug vorzuschlagen, die mechanisch belastbar ist und bei der die Steuerungseinrichtung vor Umwelteinflüssen besser geschützt ist.

Zur Lösung der Aufgabe ist eine Steckdose gemäß der technischen Lehre des Anspruchs 1 vorgesehen.

Ein Grundgedanke der Erfindung ist es, die Steuerungseinrichtung in einem Steuerungskapselkörper anzuordnen, der die empfindlichen elektrischen Bauteile elektrisch isoliert und vor Umwelteinflüssen schützt. Es entsteht eine gekapselte Steuerungseinheit, die relativ frei in oder an dem Steckdosengehäuse anordenbar ist.

Eine Ausführungsform kann vorsehen, dass der Steuerungskapselkörper ein Steuerungskapselgehäuse umfasst, in das die elektrischen Bauteile der Steuerungseinrichtung, die zweckmäßigerweise auf einer Leiterplatte angeordnet sind, aufnimmt. Besonders bevorzugt ist jedoch ein Vergießen oder Umspritzen der elektrischen Bauteile, insbesondere der Leiterplatte. Der Steuerungskapselkörper wird bei dieser Ausgestaltung der Erfindung durch einen Gusskörper gebildet, bei dem die in ihm enthaltenen elektrischen Bauteile der Steuerungseinrichtung mit einem Guss-Isolationsmaterial umspritzt oder umgossen sind. Mithin sind also die empfindlichen elektrischen Bauteile durch das Guss-Isolationsmaterial elektrisch isoliert und zudem vor mechanischen Umwelteinflüssen, beispielsweise Feuchtigkeit, Verschmutzung und dergleichen, geschützt.

Ein weiterer Gedanke der Erfindung ist es dabei, dass der Steuerungskapselkörper eine Baueinheit bildet, die vom Steckdosengehäuse separat ist. Das Steckdosengehäuse wird beim rauen Alltagsbetrieb häufig beschädigt, beispielsweise durch das Kupplungsmaul des Anhängers beim Rangieren. Auch durch ein unvorsichtiges Einstecken des Steckers in die Steckdose nimmt das Steckdosengehäuse häufig Schaden. Die relativ teure und komplizierte Steuerungseinrichtung, die zudem mit dem Bordnetz des Kraftfahrzeuges in der Praxis bereits verbunden ist, muss jedoch nach einem erfindungsgemäßen Ansatz nicht ausgewechselt werden. Es genügt, lediglich das Steckdosengehäuse auszutauschen, während die Steuerungseinrichtung am Kraftfahrzeug verbleiben kann.

Besonders bevorzugt ist es, wenn das Guss-Isolationsmaterial weicher als das Steckdosengehäuse ist. Somit kann das Guss-Isolationsmaterial bzw. der Gusskörper beispielsweise Stoßbelastungen aufnehmen, die das Steckdosengehäuse beschädigen. Dieses zerbricht zwar, der Gusskörper bleibt jedoch unbeschädigt. Zudem werden Stoßbelastungen von den elektrischen Komponenten durch das weiche, elastische Guss-Isolationsmaterial abgehalten.

Bevorzugt ist es, wenn ein Endbereich des Anschlusskabels und/oder eine Tülle, in der das Anschlusskabel aufgenommen ist, in dem Guss-Isolationsmaterial zumindest teilweise aufgenommen sind. Somit ist die elektrische Isolation bis zu dem Anschlusskabel geführt. Auch eine mechanische Belastung wird somit von dem Guss-Isolationsmaterial aufgenommen, so dass das Anschlusskabel in seinem empfindlichen, ansonsten elektrisch zugänglichen Endbereich geschützt ist. Eine das Anschlusskabel umgebende Tülle schafft zusätzlich noch eine mechanische Stabilität.

Bevorzugt ist es, wenn der Gusskörper mindestens zwei Guss-Kunststoffe mit unterschiedlicher Elastizität aufweist. So kann beispielsweise ein Kernbereich, der die elektrischen Bauteile ummantelt, mit einem relativ harten Guss-Kunststoff umspritzt oder in einen solchen Kunststoff eingegossen sein, während ein Randbereich des Gusskörpers, der in Kontakt mit beispielsweise dem Steckdosengehäuse, einem Halter für die Steckdose oder dergleichen kommt, eine weichere Konsistenz aufweist.

Beispielsweise hat der Bereich des Gusskörpers mit hoher Elastizität eine Stoßabsorptionsfunktion und/oder eine Abdichtfunktion. Der weichere Bereich kann beispielsweise zur Abdichtung des Steckdosengehäuses vorgesehen sein. Besonders bevorzugt ist es, wenn ein Rand, insbesondere ein Ringrand, des Steuerungskapselkörpers durch das weiche, hohe Elastizität aufweisende Guss-Isolationsmaterial gebildet ist.

Eine Montageerleichterung stellt es dar, wenn die Steckkontakte der Steckkontakt-Anordnung an einem Steckkontakt-Träger angeordnet sind. Dieser ist beispielsweise plattenartig. Der Steckkontakt-Träger kann jedoch auch eine Gehäuseform aufweisen, d.h. beispielsweise ein Kontaktträgergehäuse sein, das in dem Steckdosengehäuse seinerseits wiederum aufgenommen ist. Es ist aber auch möglich, dass das Steckdosengehäuse beispielsweise Aufnahmekanäle für die Steckkontakte, die insbesondere als Buchsen ausgestaltet sind, aufweist.

Ein der Steuerungseinrichtung zugewandter Abschnitt der Steckkontakt-Anordnung ist zweckmäßigerweise in dem Steuerungskapselkörper aufgenommen. Insbesondere ist der vorgenannte Steckkontakt-Träger ganz oder im Wesentlichen in dem Steuerungskapselkörper oder einem davon separaten Steckkontakt-Kapselkörper aufgenommen. Die letzte Variante stellt eine zweiteilige Bauweise dar, d.h. die Steckkontakte und die Steuerungseinrichtung sind in jeweils einem separaten Kapselkörper aufgenommen.

In diesem Zusammenhang sei erwähnt, dass die Steuerungseinrichtung auch eine erste und mindestens eine zweite Baugruppe umfassen kann, wobei die erste und die mindestens eine zweite Baugruppe jeweils in einem Steuerungskapselkörper angeordnet sein können. Die Steuerungskapselkörper sind vorzugsweise Gusskörper.

Zur Verankerung in dem Gussmaterial ist es vorteilhaft, wenn an mindestens einem der Steckkontakte eine Verankerungskontur, beispielsweise ein Vorsprung, eine Ausnehmung oder dergleichen, zur Verankerung an dem Steuerungskapselkörper, insbesondere dem Guss-Isolationsmaterial, vorhanden ist. Somit sind die Steckkontakte in dem Kapselkörper fest aufgenommen, so dass mechanische Belastungen von den diesbezüglich relativ empfindlichen elektrischen Bauteilen der Steuerungseinrichtung, beispielsweise integrierten Schaltkreisen, Kondensatoren und dergleichen, abgehalten werden.

Die Leiterplatte ist vorzugsweise eine Multilayer-Platte, d.h. eine Leiterplatte mit mindestens einer Zwischenlage zwischen ihrer Ober- und Unterseite, wobei in der Zwischenlage Leiterbahnen verlaufen.

Ein Randbereich der bereits erwähnten Leiterplatte der Steuerungseinrichtung oder auch ein Randbereich des Steckkontakt-Trägers, insbesondere wenn dieser als Platte ausgestaltet ist, steht vor den in jeweils oder sie jeweils aufnehmenden Kapselkörper zur Halterung an dem Steckdosengehäuse vor. Dieser Kapselkörper kann wie gesagt der Steuerungskapselkörper oder auch der davon separate Steckkontakt-Kapselkörper sein.

Das Steckdosengehäuse weist zweckmäßigerweise eine Steckkontakt-Aufnahme für die Steckkontakt-Anordnung, beispielsweise den vorgenannten Steckkontakt-Träger auf. Die Aufnahme des Steckdosengehäuses ist zweckmäßigerweise als eine Rastaufnahme ausgestaltet. Dabei ist die Anordnung vorteilhaft so getroffen, dass lediglich eine Montage der Steckkontakt-Anordnung am Steckdosengehäuse möglich ist, eine Demontage bzw. ein Abziehen des Steckdosengehäuses von den Steckkontakten jedoch verhindert wird. Man kann dies beispielsweise durch eine Montageschräge erreichen. Das Steckdosengehäuse rastet sozusagen auf die Steckkontakt-Anordnung auf, so dass diese unverlierbar am Steckdosengehäuse gehalten ist.

Vorzugsweise sind die Steckkontakt-Anordnung und die Steuerungseinrichtung über flexible Leitungsverbindungen miteinander verbunden. Dadurch ist es möglich, dass beispielsweise bei einer mechanischen Belastung der Steckkontakt-Anordnung beim Einstecken des anhängerseitigen Steckers von der Steuerungseinrichtung abgehalten wird. Die flexiblen Leitungsverbindungen sind insbesondere vor dem Umgießen oder Umspritzen noch flexibel. Durch das Umgießen kann die Flexibilität zumindest teilweise verloren gehen. Es ist aber auch möglich, dass beispielsweise durch einen Mehrkomponentenguss die Steuerungseinrichtung und die Steckkontakt-Anordnung jeweils in einem relativ harten Guss-Isolationsmaterial aufgenommen sind, wobei zwischen den Schichten mit hartem Guss-Isolationsmaterial eine Schicht mit weicherem Guss-Isolationsmaterial vorhanden sein kann, in dem die flexiblen Leitungsverbindungen verlaufen. Somit bleibt also eine gewisse Flexibilität zwischen einerseits dem Gussbereich, der die Steckkontakt-Anordnung mantelt, und andererseits dem Gussbereich, der die Steuerungseinrichtung mantelt, vorhanden.

Die Leitungsverbindungen können beispielsweise Kabelverbindungen sein. Besonders bevorzugt ist es, wenn die Leitungsverbindungen flexible Kontaktfahnen aufweisen, die an Ihnen zugeordneten Kontaktflächen am jeweils anderen Bauteil, beispielsweise der Steuerungseinrichtung oder der Steckkontakt-anordnung, anliegen und somit elektrische Kontakte herstellen. Vorzugsweise sind die Kontaktfahnen an den Steckkontakten angeordnet, während die bevorzugt feststehenden Kontaktflächen an der Steuerungseinrichtung, beispielsweise deren Leiterplatte, vorgesehen sind. Die Kontaktfahnenverbindung kann später umgossen werden, so dass sie fest und stabil ist. Es versteht sich, dass insbesondere dann, wenn die Steckkontakte und die Steuerungseinrichtung in einem jeweils separaten Kapselkörper angeordnet sind, die flexible Verbindung mittels der Kontaktfahnen und Kontaktflächen auch im montierten Zustand der Steckdose erhalten bleiben kann.

Zweckmäßigerweise ist das Steckdosengehäuse an einem Halter angeordnet oder anordenbar. Der Halter verschließt vorteilhaft eine offene Seite des Steckdosengehäuses. Dies kann auch in Verbindung mit einem der Kapselkörper geschehen, d.h. dass der Halter in Verbindung mit beispielsweise dem Steuerungskapselkörper die Öffnung des Steckdosengehäuses verbindet.

Bevorzugt ist es, wenn der Steuerungskapselkörper zumindest teilweise in dem Steckdosengehäuse aufgenommen ist. Dadurch ist er besonders gut vor Umwelteinflüssen geschützt. Beispielsweise hat der Steuerungskapselkörper mindestens eine Anlagekontur zur formschlüssigen Anlage an einer Wandfläche des Steckdosengehäuses. Diese Wandfläche kann beispielsweise eine Stirnwandfläche und/oder eine Innenwandfläche sein. Bevorzugt ist es, wenn eine Außenumfangskontur des Steuerungskapselkörpers zu einer Innenumfangskontur des Steckdosengehäuses passend ist. Es ist aber auch möglich, dass der Steuerungskapselkörper das Steckdosengehäuse sozusagen verlängert und somit ein Verlängerungsbauteil bildet.

Bezüglich des Anschlusskabels ist noch nachzutragen, dass dies beispielsweise stirnseitig aus der Steckdose herausgeführt sein kann. Aber auch ein seitlicher Anschluss des Anschlusskabels an die Steckdose ist zur Einsparung von Platz ohne Weiteres möglich. Das Anschlusskabel kann beispielsweise an einer von der Steckkontakt-Anordnung abgewandten Seite der Steuerungseinrichtung an diese angeschlossen sein. Es ist aber auch möglich, dass das Anschlusskabel zwischen der Steuerungseinrichtung und der Steckkontakt-Anordnung mit der Steckdose verbunden ist.

Sofern der Steckkontakt-Träger in einem separaten Steckkontakt-Kapselkörper aufgenommen ist, ist es selbstverständlich ebenfalls vorteilhaft, wenn er mindestens eine Anlagekontur zur formschlüssigen Anlage an einer Wandfläche des Steckdosengehäuses aufweist. Die vorgenannten Maßnahmen sind also auch in Bezug auf den vom Steuerungskapselkörper separaten Steckkontakt-Kapselkörper anwendbar. Dies gilt selbstverständlich auch für die nachfolgend genannten Merkmale, die vorteilhaft beim Steuerungskapselkörper vorgesehen sind:

An dem Steuerungskapselkörper ist zweckmäßigerweise mindestens eine Befestigungseinrichtung zur Befestigung an dem Steckdosengehäuse vorhanden. Die Befestigungseinrichtung umfasst beispielsweise eine Rastaufnahme, einen Rastvorsprung, eine Bajonettkontur einer Bajonettverbindung oder dergleichen. Selbstverständlich ist auch eine Schraubaufnahme, eine Steckaufnahme oder ein Steckvorsprung ebenfalls als Befestigungseinrichtung denkbar.

Es versteht sich, dass das Steckdosengehäuse vorteilhaft mit der Befestigungseinrichtung des Steuerungskapselkörpers korrespondierende Befestigungsmittel aufweist, z.B. Rastmittel, Bajonettkonturen, Steckaufnahmen, Steckvorsprünge, Schraubgewinde oder dergleichen.

Bevorzugt ist es, wenn der Steuerungskapselkörper eine Öffnung des Steckdosengehäuses zumindest teilweise verschließt. Dies kann beispielsweise an einer Seitenwand, Rückwand oder dergleichen des Steckdosengehäuses vorgesehen sein.

An dem Steuerungskapselkörper ist zweckmäßigerweise mindestens eine Aufnahmekontur, beispielsweise eine Bohrung oder eine Aussparung, für einen in das Steckdosengehäuse einschraubbaren oder das Steckdosengehäuse durchdringenden Montagebolzen vorhanden. Der Montagebolzen dient beispielsweise zur Montage der Steckdose an einem Halter oder zur Montage einer Rückwand des Steckdosengehäuses.

An dem Steckdosengehäuse ist vorzugsweise ein Deckel zum Überdecken oder Verschließen der Steckseite der Steckkontakt-Anordnung beweglich gelagert bzw. beweglich angelenkt. Gerade solche Deckel neigen dazu, beim täglichen Betrieb beschädigt zu werden. Wie bereits oben erwähnt, ist der Austausch des Steckdosengehäuses besonders einfach.

Die Steuerungseinrichtung ist vorzugsweise eine elektronische Steuerungseinrichtung. Bevorzugt umfasst die Steuerungseinrichtung beispielsweise einen Verstärker zur Verstärkung mindestens eines Signals, das von dem Bordnetz des Kraftfahrzeugs gesendet wird oder eines vom Anhänger an das Bordnetz des Kraftfahrzeugs zu sendenden Signals. Auch ein Decoder zur Decodierung eines digitalen Signals oder ein Encoder zur Codierung eines digitalen Signals sind vorteilhaft bei der Steuerungseinrichtung vorgesehen. Besonders bevorzugt ist es, wenn die Steuerungseinrichtung eine Busschnittstelle, beispielsweise eine CAN-Busschnittstelle, eine FlexRay-Busschnittstelle oder dergleichen, zur Ankopplung an einen Datenbus des Kraftfahrzeugs aufweist. Auch eine Prüfeinrichtung kann zweckmäßigerweise Bestandteil der Steuerungseinrichtung sein. Die Prüfeinrichtung dient zur Überprüfung mindestens einer elektrischen Anhängerkomponente, beispielsweise einer Beleuchtungsanlage des Anhängers. Die Prüfeinrichtung prüft beispielsweise, ob eine Leuchte defekt ist. Es kann auch eine Prüfroutine vorgesehen sein, d.h. dass die Steuerungseinrichtung beispielsweise sequenziell mehrere Leuchten oder sonstige Verbraucher des Anhängers ansteuert, so dass ein Bediener deren Funktion visuell überprüfen kann.

Nachfolgend werden Ausführungsbeispiele der Erfindung anhand der Zeichnung erläutert. Es zeigen:
- Figur 1: eine Seitenansicht einer Anhängekupplung mit einer schematisch dargestellten Steckdose,

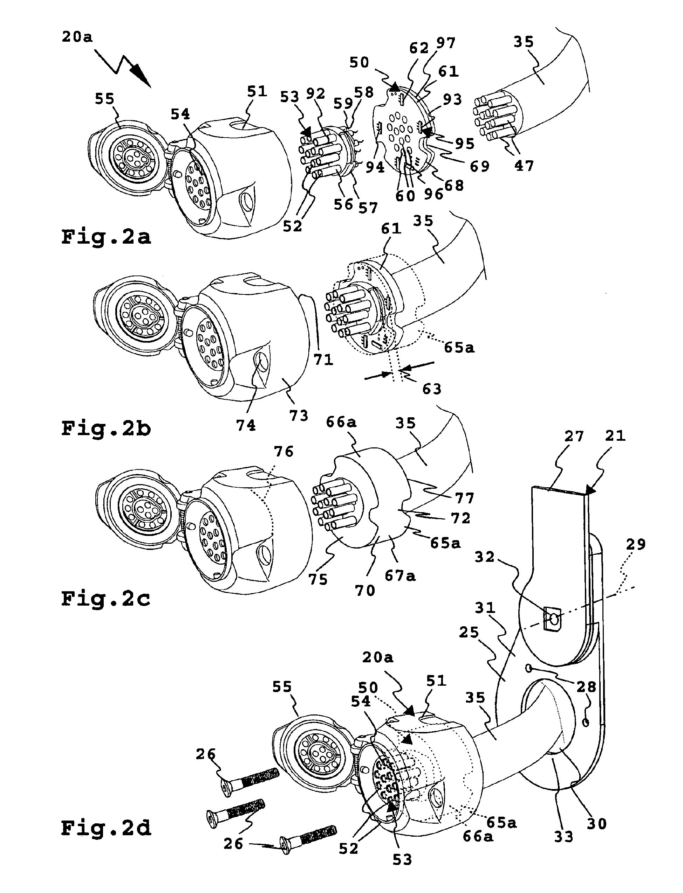

- Figur 2a-2c: ein erstes Ausführungsbeispiel einer erfin- dungsgemäßen Steckdose in verschiedenen Montagezu- ständen und
- Figur 2d: eine Explosionsdarstellung zur Veranschaulichung einer Montage der Steckdose gemäß Figuren 2a - 2c an einem fahrzeugseitigen Halter,
- Figur 3: ein zweites Ausführungsbeispiel einer erfindungs- gemäßen Steckdose mit einem Montagebohrungen auf- weisenden Steuerungskapselkörper,

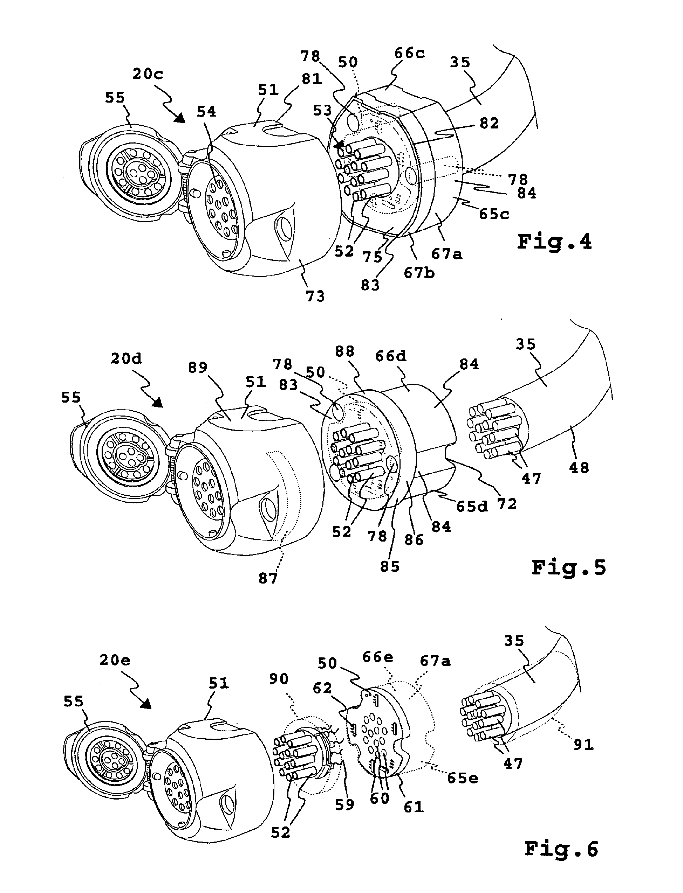

- Figur 4: ein drittes Ausführungsbeispiel einer erfindungs- gemäßen Steckdose mit einem Steuerungskapselkörper, der mehrere Komponenten aufweist,
- Figur 5: ein viertes Ausführungsbeispiel einer erfindungs- gemäßen Steckdose, deren Steuerungskapselkörper in ein Steckdosengehäuse einrastbar ist, und
- Figur 6: ein fünftes Ausführungsbeispiel einer erfindungs- gemäßen Steckdose mit einem Steuerungskapselkörper und einem Steckkontakt-Kapselkörper.

Eine Anhängekupplung 10 enthält einen an einem Schwenklager 11 schwenkbar gelagerten Kugelhals 12, an dessen vorderem, freien Ende ein Kugelkopf 13 zum Anhängen eines Anhängers 14 angeordnet ist. Die Anhängekupplung 10 ist an einer Trägeranordnung 15 eines Kraftfahrzeugs 16 befestigt. Die Trägeranordnung 15 enthält Seitenträger 17 zur Anbindung an Fahrzeuglängsholme des Kraftfahrzeugs 16, beispielsweise eines Personenkraftwagens, sowie einen sich zwischen den Seitenträgern 17 erstreckenden Querträger 18, an dem das Schwenklager 11 befestigt ist. Der Querträger 18 ist hinter einem Stoßfänger 19 angeordnet. In der Ruheposition der Anhängekupplung 10, bei der der Kugelkopf 13 unter das Kraftfahrzeug 16 geschwenkt ist, befindet sich der Kugelhals 12 in einem durch den Stoßfänger 19 ganz oder im Wesentlichen verdeckten Bereich unterhalb des Kraftfahrzeugs 16.

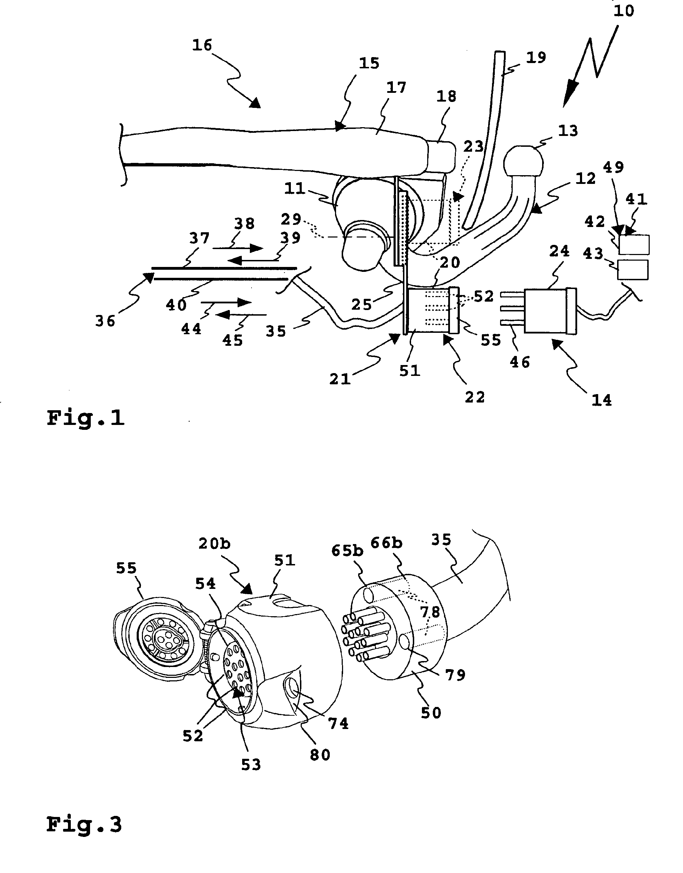

Eine Steckdose 20 der Anhängekupplung 10 kann an einer Haltevorrichtung 21 zwischen der in Figur 1 in durchgezogenen Linien gezeichneten Arbeitsposition 22 und einer in gestrichelten Linien dargestellten Ruheposition 23 geschwenkt werden. In der Ruheposition 23 ist die Steckdose 20 vorteilhaft vollständig oder im Wesentlichen durch den Stoßfänger 19 verdeckt, so dass sie kaum oder nicht sichtbar ist. In der Arbeitsposition 22 jedoch steht die Steckdose 20 nach unten vor den Stoßfänger 19 vor, so dass ein Stecker 24 in die Steckdose 20 zur Herstellung einer elektrischen Verbindung zwischen dem Kraftfahrzeug 16 und dem Anhänger 14 einsteckbar ist.

Die Steckdose 20 ist an einem Halter 25 befestigt, beispielsweise mit Schrauben oder Montagebolzen 26 angeschraubt, angeklebt oder dergleichen. Die Schrauben 26 durchdringen Bohrungen 28 am Halter 25.

Der Halter 25 ist bezüglich eines Basisteils 27 um eine Schwenkachse 29 schwenkbar. Das Basisteil 27, das man auch als Befestigungsteil bezeichnen könnte, ist beispielsweise eine Halteplatte, die am Querträger 18 befestigt ist, beispielsweise angeschweißt, angeschraubt oder dergleichen.

Der Halter 25 weist eine im Wesentlichen plattenartige Gestalt auf. Eine Ausnehmung 30 befindet sich an einem unteren Abschnitt 31 des Halters 25. Neben dem unteren Abschnitt 31 ist ein Schwenklager 32 zum schwenkbaren Lagern des Halters 25 bezüglich des Basisteils 27.

Die Steckdose 20 ist beispielsweise mit einem Anschlusskabel 35 an ein Bordnetz 36 des Kraftfahrzeugs 16 angeschlossen.

Das Bordnetz 36 umfasst beispielsweise einen Datenbus 37, auf dem digitale Bus-Signale 38 in Richtung der Steckdose 20 gesendet werden und/oder auf dem die Steckdose 20 digitale Signale 39 senden kann. Das Bordnetz 36 umfasst ferner eine oder mehrere Leitungen 40 zur elektrischen Energieversorgung des Anhängers 14. Die digitalen Signale 38 dienen zur Ansteuerung von elektrischen Anhängerkomponenten 41, beispielsweise Rückleuchten 42 und Blinkleuchten 43.

Ein weiteres Konzept des Bordnetzes 36 kann auch vorsehen, dass die Signale zur Ansteuerung der Anhängerkomponenten 41 diskrete, analoge Signale sind, beispielsweise analoge Signale 44, die das Bordnetz 36 in Richtung der Steckdose 20 sendet oder auch analoge Signale 45, die die Steckdose 20 in Richtung des Bordnetzes 36 sendet. Die Signale 39, 45 können beispielsweise Überwachungssignale sein, mit denen die Steckdose 20 einen Betriebszustand der Anhängerkomponenten 41 in Richtung des Bordnetzes 36 signalisiert. Der Betriebszustand kann beispielsweise eine Funktionsanzeige sein, mit der eine korrekte oder inkorrekte Funktion der jeweiligen Leuchte 42 oder 43 angezeigt wird.

Die Rückleuchten 42 und die Blinkleuchte 43 bilden Bestandteile einer Beleuchtungsanlage 49 des Kraftfahrzeugs 16.

Zur Verarbeitung der Signale 38, 39 und/oder 44, 45 - eine Kombination einer Verarbeitung digitaler und analoger Signale ist bei einer erfindungsgemäßen Steckdose selbstverständlich auch möglich - dient bei der Anhängekupplung 10 eine Steuerungseinrichtung 50. Die Steuerungseinrichtung 50 ist jedoch anders als bei üblichen Anhängekupplung nicht beispielsweise in einem Innenraum oder einem sonstigen geschützten Bereich des Kraftfahrzeugs 16 angeordnet, sondern an oder in einem Steckdosengehäuse 51. In dem Steckdosengehäuse 51 sind Steckkontakte 52 einer Steckkontakt-Anordnung 53 aufgenommen. Eine Steckseite 54 der Steckkontakt-Anordnung 53 ist mittels eines Deckels 55 verschließbar.

Der Deckel 55 ist gelenkig am Steckdosengehäuse 51 befestigt, vorliegend schwenkgelenkig. Eine Schiebebefestigung wäre ebenfalls denkbar. Ferner könnte an ein Steckdosengehäuse ansteckbarer Deckel bei einer erfindungsgemäßen Steckdose vorgesehen sein.

Die Steckkontakte 52 sind als Steckbuchsen ausgestaltet, in die Steckvorsprünge 46 bzw. Steckkontakte des Steckers 24 des Anhängers 14 einsteckbar sind. Die Steckkontakte 52 sind zumindest teilweise, vorzugsweise insgesamt mit der Steuerungseinrichtung 50 verbunden, die ihrerseits mit dem Anschlusskabel 35 verbunden ist und somit eine elektrische Verbindung zwischen einerseits dem Bordnetz 36 und andererseits den Anhängerkomponenten 41 herstellt. Es versteht sich, dass auch eine direkte Verbindung zwischen zumindest manchen der Steckkontakte 52 und dem Anschlusskabel 35, beispielsweise einzelnen Leitungen 47 des Anschlusskabels 35, vorhanden sein können, so zum Beispiel zur Herstellung eines Masseverbindung zwischen dem Anhänger 14 und dem als Zugfahrzeug dienenden Kraftfahrzeug 16.

Die Steuerungseinrichtung 50 ist jedoch durch ihre Anordnung in der Steckdose 20 oder an der Steckdose 20 im Außenbereich des Kraftfahrzeuges 16 angeordnet und somit gegenüber Umwelteinflüssen, beispielsweise Feuchtigkeit, Hitze oder auch mechanischer Beschädigung ausgesetzt. Nässe würde den elektrischen Komponenten der Steuerungseinrichtung 50, beispielsweise integrierten Schaltkreisen und dergleichen, besonders zusetzen, so dass die Funktionstüchtigkeit der Anhängekupplung 10 nicht mehr gewährleistet ist.

Weiterhin kommt es häufig bei der Benutzung einer Steckdose einer Anhängekupplung zu Beschädigungen von deren Steckdosengehäuse und/oder Deckel. Zwar schützt beispielsweise das Steckdosengehäuse 51 die Steuerungseinrichtung 50. Wenn jedoch das vorteilhaft verhältnismäßig harte Steckdosengehäuse 51 durch Stoßbelastung oder dergleichen beschädigt wird und/oder der Deckel 55 abbricht, fällt dieser Schutz der Steuerungseinrichtung 50 oder der Steckkontakte 52 weg. Auch dann sollte ein ausreichender Schutz der elektrischen Komponenten der Steuerungseinrichtung 50 vorhanden sein.

Ein Austausch der Steckdose 20 als Ganzes ist aufwändig. Die Steckdose müsste elektrisch mit dem Bordnetz 36 verbunden werden. Wenn also nur das Steckdosengehäuse 51 oder der Deckel 55 beschädigt sind, ist ein Austausch nur des Steckdosengehäuses 51 und/oder des Deckels 55 vorteilhaft.

Die vorgenannten Problemstellungen werden durch die Steckdose 20 gelöst. Nachfolgend werden Steckdosen 20a-20e vorgestellt, bei denen vorteilhaft die vorgenannten Problemstellungen gelöst sind. Gleiche oder gleichartige Komponenten der Steckdosen 20a-20e sind mit denselben, teilweise bereits bei der Steckdose 20 verwendeten Bezugszeichen versehen.

Die Steckkontakte werden durch Buchsen 56 gebildet, die an einem Steckkontakt-Träger 57 angeordnet sind. Die Steckkontakt-Buchsen 56 stehen nach vorn und hinten oder vor zwei einander entgegengesetzte Seiten des Steckkontakt-Trägers 57 vor. Vorliegend hat der Steckkontakt-Träger 57 eine plattenartige Gestalt, wobei selbstverständlich auch eine Gehäusebauweise bei einer erfindungsgemäßen Steckdose möglich ist. Dann wären beispielsweise die Buchsen 56 in einem Steckkontakt-Gehäuse oder Gehäusekörper aufgenommen.

An einer von der Steckseite 54 abgewandten Seite der Steckkontakt-Anordnung 53 sind flexible Leitungsverbindungen 58 zu der Steuerungseinrichtung 50 vorgesehen. Die flexiblen Leitungsverbindungen 58 umfassen an den der Steuerungseinrichtung 50 zugewandten Enden der Buchsen 56 angeordnete Kontaktfahnen 59. Die Kontaktfahnen 59 sind zweckmäßigerweise einstückig mit den Buchsen 56 und beispielsweise als von diesen abstehende, plättchenartige Teile ausgestaltet. Es versteht sich, dass man beispielsweise auch ein Stück Draht oder Litze an den jeweiligen Buchsenkörper der Buchse 56 anlöten oder in sonstiger Weise elektrisch mit diesem verbinden könnte.

Die Kontaktfahnen 59 liegen elektrische Kontakte herstellend an Kontaktflächen 60 der Steuerungseinrichtung 50 an. Dies ist zumindest solange der Fall, wie der Steckkontakt-Träger 57 und eine Leiterplatte 61, an der die Kontaktflächen 60 sowie weitere elektrische Bauteile 62 der Steuerungseinrichtung 50 angeordnet sind, in einem Montageabstand 63 positioniert sind.

Die Leiterplatte 61 kann vorderseitig und/oder rückseitig mit elektrischen Bauteilen 62 bestückt sein. Ferner können an ihrer Vorderseite und/oder Rückseite und/oder bei einer Ausgestaltung als Multilayer-Platine in einer Zwischenlage 97 Leiterbahnen vorgesehen sein.

Die Flexibilität der Leitungsverbindungen 58, die beispielsweise durch die federnd auf den Kontaktflächen 60 aufliegenden Kontaktfahnen 59 vorhanden ist, wenn der Steckkontakt-Träger 57 und die Leiterplatte 61 freistehend, jedoch im Montageabstand 63 angeordnet sind, ist jedoch dann nicht mehr vorhanden, wenn zur elektrischen Isolierung und dem Schutz gegenüber Umwelteinflüssen die Steuerungseinrichtung 50 insgesamt und die Steckkontakt-Anordnung 53, zumindest aber der Steckkontakt-Träger 57 und die Leitungsverbindungen 58 in einem sie elektrisch isolierenden und gegenüber Umwelteinflüssen vollständig umschließenden und kapselnden Steuerungskapselkörper 65a angeordnet sind. Der Steuerungskapselkörper 65a wird durch einen Gusskörper 66a gebildet, bei dem die elektrischen Bauteile 66 sowie die Leiterplatte 61 mit einem elektrisch isolierenden und die vorgenannten Komponenten mechanisch schützendem Guss-Isolationsmaterial 67 umspitzt, im vorliegenden Fall sogar eingegossen.

Wenn die Komponenten der Steuerungseinrichtung 50 lediglich umspritzt wären, bliebe die Außenkontur der Leiterplatte 61 mit den an ihr angeordneten elektrischen Bauteilen 62 im Wesentlichen erhalten. Es wäre lediglich ein Mantel aus Guss-Isolationsmaterial an den vorgenannten Bauteilen angeordnet. Eine Außenkontur der Steuerungseinrichtung 50, beispielsweise eine Umfangskontur 68 der Leiterplatte 61. Die Umfangskontur 68 weist mehrere, beim Ausführungsbeispiel 3, Aufnahmekonturen 69 oder sonstige Freisparungen oder Ausnehmungen auf, in denen im montierten Zustand der Steckdose 20 die Montagebolzen bildenden Schrauben 26 verlaufen. Die Schrauben 26 können somit an der Umfangskontur 68 vorbei in den Halter 25 eingeschraubt werden.

Es ist aber auch möglich, dass nur ein Teil einer Steuerungseinrichtung umgossen oder umspritzt wird.

Der Steuerungskapselkörper 65 hat eine Umfangskontur, die als Anlagekontur 70 zur formschlüssigen Anlage an einer Wandfläche 71 des Steckdosengehäuses 51 vorgesehen sind. Korrelierend mit den Aufnahmekonturen 69 sind an dem Steuerungskapselkörper 65a ebenfalls Aufnahmekonturen 72 vorgesehen, in denen im montierten Zustand der Steckdose 20a die Montagebolzen oder Schrauben 26 verlaufen. Die Wandfläche 71 ist eine Innenwandfläche einer Umfangswand 73 des Steckdosengehäuses 51. Die Aufnahmekonturen 72 fluchten mit Durchstecköffnungen 74 des Steckdosengehäuses 51 zum Durchstecken der Montagebolzen oder Schrauben 26. Vorteilhaft liegt eine Vorderseite 75 an einer Anlagekontur im Innenraum des Steckdosengehäuses 51 an, zumindest über einen Teilumfang. Die Anlagekontur 76 erstreckt sich vorteilhaft von flachen Wandabschnitten weg, an denen die Durchstecköffnungen 74 angeordnet sind. Vorzugsweise erstreckt sich die Anlagekontur 76 über einen gesamten Innenumfang des Steckdosengehäuses 51, so dass der Steuerungskapselkörper 65 das Steckdosengehäuse 51 rückseitig abdichtet, zumindest aber dicht an der Anlagekontur 76 anliegt. Jedenfalls wird das Steckdosengehäuse 51 im montierten Zustand durch den rückseitig angeordneten Halter 25 verschlossen. Eine Rückseite 77 liegt dabei zweckmäßigerweise an einem die Ausnehmung 30 umgebenden, vorliegend ringförmigen Wandabschnitt 33 dicht an. Vorzugsweise ist also eine erfindungsgemäße Anordnung getroffen, bei der der Steuerungskapselkörper 65 einerseits am Steckdosengehäuse 51 und andererseits an dem dieses haltenden Halter 25 im Wesentlichen flächig, vorzugsweise dicht abschließend, anliegt. Mithin ist also bei der Steckdose 20a in vorteilhafter Ausgestaltung der Steuerungskapselkörper 65 zwischen dem Steckdosengehäuse 51 und dem Halter 25 gehalten. Zusätzliche Montagemittel zum Halten des Steuerungskapselkörpers 65 beispielsweise am Halter 25 und/oder des Steckdosengehäuses 51 sind also nicht erforderlich.

Das Guss-Isolationsmaterial 67a überdeckt eine Vorderseite des Steckkontakt-Trägers 57 bei dem Steuerungskapselkörper 65a nicht. Selbstverständlich könnte das Gussmaterial auch zwischen die Buchsen 56 fließen und die Vorderseite des Steckkontakt-Trägers 57 überdecken, was eine zusätzliche elektrische Isolation darstellt.

Auch bei einem Steuerungskapselkörper 65b, der durch einen Gusskörper 66b gebildet wird, ist das Guss-Isolationsmaterial 67a nicht an der Vorderseite des Steckkontakt-Trägers 57 angeordnet. Der Gusskörper 66b entspricht im Wesentlichen dem Gusskörper 66a, hat jedoch anstelle der als seitlich offenen, kanalartigen Aufnahmekonturen 72 eine Bohrung oder Durchstecköffnung 78 zum Durchstecken der Montagebolzen 26. Wandbereiche 79 des Steuerungskapselkörpers 65b um die Durchstecköffnungen 78 herum liegen vorzugsweise flächig an Innenseiten von Wandbereichen 80 des Steckdosengehäuses 51 an, an denen die Durchstecköffnungen 74 angeordnet sind.

Während die Steuerungskapselkörper 65a, 65b das Steckdosengehäuse 51 sozusagen von innen her verschließen, vorzugsweise in Kombination mit einem Halter, beispielsweise dem Halter 25, an dem das Steckdosengehäuse 51 angeordnet ist und/oder in Kombination mit einer nicht dargestellten Rückwand für das Steckdosengehäuse 51, verschließt ein Steuerungskapselkörper 65c das Steckdosengehäuse 51 von hinten. Der Steuerungskapselkörper 65c bildet quasi eine Rückwand für das Steckdosengehäuse 51 und verschließt dessen hintere Öffnung 81.

Nun wäre es möglich, dass man den Steuerungskapselkörper 65c sozusagen als ein Einsatzstück oder einen Einsatzkörper ausgestaltet, d.h. dass er zumindest mit seinem vorderen, dem Steckdosengehäuse 51 zugewandten Teil in dessen Innenraum sozusagen eintaucht und an der Innenseite der Umfangswand 73 anliegt. Dieser Grundgedanke ist bei dem Steuerungskapselkörper 65c aufgegriffen insoweit, als an seiner Vorderseite 75 eine Nut 82 eine Stufenkontur, insbesondere eine Nut 82, vorgesehen ist, in die eine Stirnseite der Umfangswand 73 eingreift.

Die Nut 82 bildet eine Anlagekontur zur formschlüssigen Anlage an einer Stirnwandfläche des Steckdosengehäuses 51.

Es versteht sich, dass ein erfindungsgemäßer Kapselkörper eine Umfangswandung eines Steckdosengehäuses auch übergreifen kann. Die Nut 82 könnte z.B. als eine Eingreifnut ausgestaltet sein, d.h. dass eine Innenwandseite und eine Außenwandseite der Umfangswand 73 jeweils flächig an Seitenwänden der Nut 82 anliegt. Die Nut 82 kann jedoch auch der Randbereich eines stufigen Vorsprunges sein, der in den Innenraum des Steckdosengehäuses 51 eingreift, während eine Stirn-Flachseite der Nut 82 oder Stufenkontur an der Stirnseite der Umfangswand 73 zweckmäßigerweise flächig anliegt.

Man könnte dies aber auch dadurch realisieren, dass beispielsweise ein vorderer, zu der Steckkontakt-Anordnung 53 näherer Bereich des Steuerungskapselkörpers 65c einen kleineren Außenumfang aufweist als ein hinterer Bereich 84, der näher beim Anschlusskabel 35 ist. Zwischen den Bereichen 83, 84 wäre dann eine Stufe vorhandnen, die an der Stirnseite der Umfangswand 73 des Steckdosengehäuses 51 anliegt. Das ist jedoch beim Ausführungsbeispiel nicht der Fall.

Der Bereich 84 des Gusskörpers 66c besteht aus einem Guss-Isolationsmaterial 67a mit vergleichsweise großer Härte, der die von ihm gemantelten und in ihm enthaltenen elektrischen Bauteile 62 der Steuerungseinrichtung 50 optimal schützt. Der Bereich 83 hingegen hat eine Dichtfunktion bezüglich des Steckdosengehäuses 51. Vorteilhaft besteht der Bereich 83 dabei aus einem Guss-Isolationsmaterial 67b, das eine höhere Elastizität als das Guss-Isolationsmaterial 67a aufweist. Dadurch ist eine optimale Abdichtfunktion gewährleistet.

An dem Steuerungskapselkörper 65c sind Durchstecköffnungen 78 zum Durchstecken der Montagebolzen oder Schrauben 26 vorgesehen. Die Durchstecköffnungen 78 fluchten mit den Durchstecköffnungen 74 am Steckdosengehäuse 51. Somit kann das Steckdosengehäuse 51 bei der Befestigung an einem Untergrund, beispielsweise dem Halter 25, den Steuerungskapselkörper 65c sozusagen zwischen sich und den Untergrund, insbesondere den Halter 25, klemmen. Es versteht sich, dass statt der Durchstecköffnungen 78 Sacklöcher möglich sind, in die die Montagebolzen 26 einschraubbar sind.

Ferner ist es möglich, dass beispielsweise in den Gusskörper 66c Schraubgewindehülsen eingegossen werden, in die die Montagebolzen 26 einschraubbar sind.

Eine Außenumfangskontur des Steuerungskapselkörpers 65c korreliert direkt mit einer Außenumfangskontur des Steckdosengehäuses 51. Wenn der Steuerungskapselkörper 65c am Steckdosengehäuse 51 montiert ist, stellt er quasi eine Verlängerung desselben nach hinten dar. In diesem Zusammenhang wäre noch nachzutragen, dass dann wenn der vordere Bereich 83 einen gegenüber dem Bereich 84 etwas kleineren Durchmesser aufweist und insofern in den Innenraum des Steckdosengehäuses 51 einsteckbar ist, ein Außenumfang des vorderen Bereichs 83 innenseitig vorzugsweise formschlüssig flächig an der Innenfläche der Umfangswand 73 anliegt.

Insbesondere dann, wenn die Öffnungen 78 des Steuerungskapselkörpers 65c Sacklöcher sind und/oder Einschraubhülsen aufweisen, können Sie als Befestigungseinrichtung zur Befestigung des Steuerungskapselkörpers 65c am Steckdosengehäuse 51 dienen.

Bei der Steckdose 20d weist deren Steuerungskapselkörper 65d eine Befestigungseinrichtung 85 in Gestalt eines Rastvorsprungs 86 auf. Der Rastvorsprung 86 greift im montierten Zustand der Steckdose 20d in eine Rastaufnahme 87 im Innenraum des Steckdosengehäuses 51 ein. Die Rastaufnahme 87 ist beispielsweise als eine Nut ausgestaltet. Zweckmäßigerweise ist die Rastaufnahme 87 an der Umfangswand 73 innen angeordnet, wobei selbstverständlich auch an anderer Stelle im Innenraum de Steckdosengehäuses 51 eine entsprechende Rastaufnahme und/oder ein Rastvorsprung vorgesehen sein könnte.

Der Rastvorsprung 86 ist als eine Art Kragen ausgestaltet, der nach radial außen vor einen hinteren Bereich 84 des Steuerungskapselkörpers 65d vorsteht. Der hintere Bereich 84 hat beispielsweise eine Außenumfangskontur, die etwa derjenigen des Steuerungskapselkörpers 65a entspricht.

Zweckmäßigerweise liegt der den Kragen 88 bildende vordere Bereich 83 des durch einen Gusskörper 66d gebildeten Steuerungskapselkörpers 65d flächig und/oder formschlüssig an der Innenseite des Steckdosengehäuses 51 an. Es versteht sich, dass anders als in der zeichnerischen Darstellung hierfür beispielsweise am vorderen Bereich 84 eine Abflachung vorhanden sein kann, die mit einer Abflachung 89 des Steckdosengehäuses 51 korreliert.

Zum Durchstecken der Montagebolzen 26 sind am vorderen Bereich 83 des Steuerungskapselkörpers 65d Durchstecköffnungen 78 vorgesehen, während am hinteren Bereich 84 seitlich offene Kanäle in der Art der Aufnahmekonturen 72 vorgesehen sind.

Die Steuerungskapselkörper 65a-65d kapseln jeweils sowohl die Steuerungseinrichtung 50 als auch die Steckkontakt-Anordnung 53 in ihrem der Steuerungseinrichtung 50 zugewandten Bereich. Bei der Steckdose 20d hingegen ist eine zweiteilige Bauform gewählt. Ein Steuerungskapselkörper 65e umfasst einen Gusskörper 66e, der ausschließlich die Steuerungseinrichtung 50 kapselt. Der Gusskörper 66e umfasst mit seinem Guss-Isolationsmaterial 67a sowohl die Leiterplatte 61 als auch die auf ihr angeordneten elektrischen Bauteile 62.

An dieser Stelle sei bemerkt, dass die Bauteile 62 beidseitig, d.h. wie in der dargestellten Form an einer Vorderseite der Leiterplatte 61, aber auch an einer Rückseite der Leiterplatte 61 angeordnet sein können. Bei der Steckdose 20e wäre es sogar vorteilhaft, wenn die Bauteile 62 lediglich an einer dem Anschlusskabel 35 zugewandten Rückseite der Leiterplatte 61 angeordnet wären und insofern durch das dort vorhandene Guss-Isolationsmaterial 67a und somit optimal geschützt wären.

Aber auch bei der Guss-Ausgestaltung des Steuerungskapselkörpers 65e ist eine optimale Bedeckung der elektrischen Bauteile 62 möglich. Lediglich die im Zentrum der Leiterplatte 61 vorhandenen Kontaktflächen 60 bleiben von dem Guss-Isolationsmaterial 67a frei. Somit ist dort ein Kontakt mit den Kontaktfahnen 59 möglich, die vor einen Steckkontakt-Kapselkörper 90 vorstehen, der den Steckkontakt-Träger 57 sowie in dessen Bereich verlaufende Abschnitte der Steckkontakte 52 kapselt und in erfindungsgemäßer Weise vor Umwelteinflüssen schützt.

Vorzugsweise ist der Steckkontakt-Kapselkörper 90 ebenfalls als ein Gusskörper ausgestaltet, d.h. er besteht aus einem Guss-Isolationsmaterial.

Es versteht sich, dass der Kapselkörper 90 auch nur eine teilweise Kapselung realisieren kann, d.h. dass er beispielsweise als ein Aufnahmegehäuse für die Steckkontakte 52 dient, das an einer oder mehreren Stellen offen ist. Jedenfalls können der Steckkontakt-Kapselkörper 90 und der Steuerungskapselkörper 65e so in einen solchen Abstand zueinander gebracht werden, dass die Kontaktfahnen 59 an den Kontaktflächen 60 elektrische Kontakte herstellend anliegen.

Es versteht sich, dass sodann noch ein Verguss erfolgen kann, d.h. dass die beiden Kapselkörper 90, 65e durch einen weiteren Vergussschritt miteinander verbunden werden können.

Es ist aber auch möglich, dass beide Kapselkörper 90, 65e als voneinander separate, jedoch in elektrischer Verbindung miteinander stehende elektrische Bauteile in dem Steckdosengehäuse 51 aufgenommen sind. Dort sind vorteilhaft in nicht dargestellter Weise Aufnahmen, vorzugsweise Rastaufnahmen, Stufen und dergleichen, vorgesehen, die die beiden Kapselkörper 90 und 65e in geeignetem Montageabstand zur Herstellung der elektrischen Leitungsverbindungen 58 halten.

Bei einer erfindungsgemäßen Ausgestaltung einer Anhänger-Steckdose ist es vorteilhaft, wenn das jeweilige Anschlusskabel mit in die Gussmasse des jeweiligen Gusskörpers eingegossen ist. Dies ist beispielsweise beim Anschlusskabel 35 der Fall, das in den jeweiligen Gusskörper 66a-66e sozusagen eingegossen ist oder mit diesem vergossen ist. Dadurch entsteht eine kompakte, elektrisch abgedichtete Einheit aus Anschlusskabel 35 und Steuerungskapselkörper 65a-65e.

Es versteht sich, dass im Sinne der Erfindung das Wort "Anschlusskabel" zu verstehen ist, dass auch Einzeladern einer Kabelverbindung gemeint sein können. Vorzugsweise sind die Leitungen 47 jeweils einzeln elektrisch isoliert und befinden sich in einem sie zusätzlich schützenden Mantel 48. Dies wiederum kann in einer Tülle 91 verlaufen, wie bei der Steckdose 20e realisiert. Die Tülle 91 ist vorzugsweise ebenfalls in die Vergussmasse des Gusskörpers 66e eingegossen. An dieser Stelle sei bemerkt, dass innerhalb der Tülle 91 die Leitungen 47 auch als Einzeladern geschützt verlaufen können, d.h. dass der Mantel 48 nicht notwendig ist. Ferner kann das Anschlusskabel 35 auch einen Anschlussschlauch aufweisen, in dem die einzeladrigen Leitungen 47 lose verlaufen.

Die Vergussmasse bzw. das Guss-Isolationsmaterial 67a, 67b hält an den Komponenten, die es umgibt, aufgrund von Stufungen und dergleichen optimal. Quasi als druckaufnehmende oder zugaufnehmende Komponente kann an einem oder mehreren der Steckkontakte 52 auch eine Verankerungskontur 92, beispielsweise ein Vorsprung, insbesondere ein Ringvorsprung, eine Nut oder dergleichen vorgesehen sein.

Die elektrischen Bauteile 62 der Steuerungseinrichtung umfassen beispielsweise einen Decodierer 93 zur Decodierung der Signale 38 sowie einen Encoder 94 zur Encodierung der Signale 39, die an das Bordnetz 36 gesendet werden. Insgesamt bilden der Decoder 93 und der Encoder 94 Bestandteile einer Busschnittstelle 95 zum Anschluss an den Datenbus 37 des Kraftfahrzeuges 16. Es versteht sich, dass die Bauteile 62 auch beispielsweise Prüfkomponenten und/oder einen Verstärker 96 zur Verstärkung von analogen Signalen, beispielsweise der Signale 44, aufweisen können.

## Patentansprüche

1. Steckdose für eine Anhängekupplung (10) für ein Kraftfahrzeug (16), mit in einem Steckdosengehäuse (51) angeordneten Steckkontakten (52) einer Steckkontakt-Anordnung (53) zur Verbindung mit einem Anschlusskabel (35), das mit einem Bordnetz (36) des Kraftfahrzeugs (16) verbunden oder verbindbar ist, und mit einer einen integralen Bestandteil der Steckdose (20; 20a-20e) bildenden elektronischen Steuerungseinrichtung (50), die zur Ansteuerung und/oder Überwachung mindestens einer elektrischen Anhängerkomponente (41) eines an die Steckdose (20; 20a-20e) anschließbaren Anhängers (14) mit mindestens einem der Steckkontakte (52) verbunden ist, wobei eine Steckseite (54) der Steckkontakt-Anordnung (53) zum Einstecken eines Steckers (24) des Anhängers (14) vorgesehen ist, wobei die Steuerungseinrichtung (50) ganz oder zumindest im wesentlichen in einem Steuerungskapselkörper (65a-65e) angeordnet ist, der zumindest einen Teil der elektrischen Bauteile (62) der Steuerungseinrichtung (50) elektrisch isoliert und gegenüber Umwelteinflüssen vollständig umschließt und kapselt, **dadurch gekennzeichnet, dass** ein Randbereich eines Steckkontakt-Trägers (57) und/oder einer Leiterplatte (61) der Steuerungseinrichtung (50) vor den ihn beziehungsweise sie jeweils aufnehmenden Kapselkörper zur Halterung an dem Steckdosengehäuse (51) vorsteht.

2. Steckdose nach Anspruch 1, **dadurch gekennzeichnet, dass** der Steuerungskapselkörper (65a-65e) durch einen Gusskörper (66a-66e) gebildet ist, bei dem die in ihm enthaltenen elektrischen Bauteile (62) der Steuerungseinrichtung (50) mit einem Guss-Isolationsmaterial (67a, 67b) umspritzt oder umgossen sind.

3. Steckdose nach Anspruch 2, **dadurch gekennzeichnet, dass** das Guss-Isolationsmaterial (67a, 67b) weicher als das Steckdosengehäuse (51) ist und/oder dass ein Endbereich des Anschlusskabels (35) und/oder eine Tülle, in der das Anschlusskabel (35) oder dessen Leitungen (47) aufgenommen ist, in dem Steuerungskapselkörper (65a-65e), insbesondere in dem Guss-Isolationsmaterial (67a, 67b), zumindest teilweise aufgenommen sind und/oder dass der Gusskörper (66a-66e) mindestens zwei Guss-Isolationsmaterialien (67a, 67b) mit unterschiedlicher Elastizität aufweist und/oder dass ein Bereich (83) des Gusskörpers (66a-66e), zweckmäßigerweise mit einer hohen Elastizität, zur Abdichtung des Steckdosengehäuses (51) vorgesehen ist.

4. Steckdose nach einem der vorhergehenden Ansprüche, **dadurch gekennzeichnet, dass** die Steckkontakte (52) der Steckkontakt-Anordnung (53) an einem Steckkontakt-Träger (57) angeordnet sind.

5. Steckdose nach Anspruch 4, **dadurch gekennzeichnet, dass** der Steckkontakt-Träger (57) ganz oder im wesentlichen in dem Steuerungskapselkörper (65a-65e) oder einem davon separaten Steckkontakt-Kapselkörper (90) aufgenommen ist.

6. Steckdose nach einem der vorhergehenden Ansprüche, **dadurch gekennzeichnet, dass** ein der Steuerungseinrichtung (50) zugewandter Abschnitt der Steckkontakt-Anordnung (53) in dem Steuerungskapselkörper (65a-65e) aufgenommen ist und/oder dass an mindestens einem der Steckkontakte (52) eine Verankerungskontur (92) zur Verankerung an dem Steuerungskapselkörper (65a-65e), insbesondere dem Guss-Isolationsmaterial (67a, 67b), vorhanden ist.

7. Steckdose nach einem der vorhergehenden Ansprüche, **dadurch gekennzeichnet, dass** die Steuerungseinrichtung (50) eine erste und mindestens eine zweite Baugruppe umfasst, und dass die erste und die mindestens eine zweite Baugruppe jeweils in einem insbesondere als Gusskörper (66a-66e) ausgestalteten Steuerungskapselkörper (65a-65e) angeordnet sind.

8. Steckdose nach einem der vorhergehenden Ansprüche, **dadurch gekennzeichnet, dass** die Steuerungseinrichtung (50) eine in dem Steuerungskapselkörper (65a-65e) aufgenommene elektrische Leiterplatte (61), insbesondere eine Multilayer-Platte, aufweist.

9. Steckdose nach einem der vorhergehenden Ansprüche, **dadurch gekennzeichnet, dass** das Steckdosengehäuse (51) eine insbesondere als Rastaufnahme ausgestaltete Steckkontakt-Aufnahme für die Steckkontakt-Anordnung (53), insbesondere den Steckkontakt-Träger (57), aufweist und/oder dass das Steckdosengehäuse (51) an einem Halter (25) angeordnet oder anordenbar ist, wobei der Halter (25) zweckmäßigerweise eine offene Seite oder eine Öffnung (81) des Steckdosengehäuses (51) verschließt.

10. Steckdose nach einem der vorhergehenden Ansprüche, **dadurch gekennzeichnet, dass** die Steckkontakt-Anordnung (53) mit der Steuerungseinrichtung (50) über flexible Leitungsverbindungen (58) miteinander verbunden sind, wobei zweckmäßigerweise die Leitungsverbindungen (58) flexible, insbesondere mit den Steckkontakten (52) einstückige Kontaktfahnen (59) umfassen, die an ihnen zugeordneten Kontaktflächen (60) am jeweils anderen Bauteil (62) elektrische Kontakte herstellend anliegen.

11. Steckdose nach einem der vorhergehenden Ansprüche, **dadurch gekennzeichnet, dass** der Steuerungskapselkörper (65a-65e) zumindest teilweise in dem Steckdosengehäuse (51) aufgenommen ist und/oder dass der Steuerungskapselkörper (65a-65e) mindestens eine Anlagekontur (70, 82) zur formschlüssigen Anlage an einer Wandfläche (71), insbesondere einer Stirnwandfläche oder einer Innenwandfläche, des Steckdosengehäuses (51) aufweist und/oder dass an dem Steuerungskapselkörper (65a-65e) mindestens eine Befestigungseinrichtung (85), insbesondere eine Rastaufnahme und/oder einen Rastvorsprung (86) und/oder eine Bajonettkontur einer Bajonett-Verbindung, zur Befestigung an dem Steckdosengehäuse (51) vorhanden ist.

12. Steckdose nach einem der vorhergehenden Ansprüche, **dadurch gekennzeichnet, dass** der Steuerungskapselkörper (65a-65e) eine Öffnung (81) des Steckdosengehäuses (51) zumindest teilweise verschließt und/oder dass an dem Steckdosengehäuse (51) ein Deckel (55) zum Überdecken oder Verschließen der Steckseite (54) der Steckkontakt-Anordnung (53) beweglich gelagert ist.

13. Steckdose nach einem der vorhergehenden Ansprüche, **dadurch gekennzeichnet, dass** an dem Steuerungskapselkörper (65a-65e) mindestens eine Aufnahmekontur (72), insbesondere eine Durchstecköffnung (78), für einen in das Steckdosengehäuse (51) einschraubbaren und/oder das Steckdosengehäuse (51) durchdringenden Montagebolzen (26) aufweist.

14. Steckdose nach einem der vorhergehenden Ansprüche, **dadurch gekennzeichnet, dass** die Steuerungseinrichtung (50) mindestens einen Verstärker (96) zur Verstärkung mindestens eines von dem Bordnetz (36) des Kraftfahrzeugs (16) gesendeten Signals oder eines an das Bordnetz (36) des Kraftfahrzeugs (16) zu sendenden Signals und/oder einen Decoder (93) zu Decodierung mindestens eines digitalen Signals (38) und/oder einen Encoder (94) zur Codierung mindestens eines digitalen Signals (39) und/oder eine Busschnittstelle (95) für einen Datenbus (37) des Kraftfahrzeugs (16) und/oder des Anhängers (14) und/oder eine Prüfeinrichtung zur Überprüfung der mindestens einen elektrischen Anhängerkomponente (41), insbesondere einer Beleuchtungsanlage (49), des Anhängers (14) aufweist.

## Claims

1. Socket for a trailer coupling (10) for a motor vehicle (16), with plug contacts (52) of a plug contact assembly (53) mounted in a socket housing (51) for connection with a connection cable (35) which is or may be connected to a vehicle electrical system (36) of the motor vehicle (16) and is connected by at least one of the plug contacts (52) to an electronic control unit (50) forming an integral part of the socket (20, 20a-20e), for the activation and/or monitoring of at least one electronic trailer component (41) of a trailer (14) which may be connected to the socket (20, 20a-20e), wherein a plug-in side (54) of the trailer (14) is provided for the insertion of a plug connector (24) of the trailer (14), wherein the control unit (50) is wholly or at least substantially mounted in a control unit encapsulating body (65a-65e) which electrically insulates and completely encloses and encapsulates at least some of the electrical components (62) of the control unit (50) from environmental influences, **characterised in that** an edge area of a plug contact carrier (57) and/or a circuit board (61) of the control unit (50) project beyond the encapsulating body holding them, for mounting on the socket housing (51).

2. Socket according to claim 1, **characterised in that** the control unit encapsulating body (65a-65e) is formed by a cast-metal body (66a-66e) in which the electrical components (62) of the control unit (50) contained within it are coated by or cast in a casting insulation material (67a, 67b).

3. Socket according to claim 2, **characterised in that** the casting insulation material (67a, 67b) is softer than the socket housing (51) and/or that an end section of the connection cable (35) and/or a sleeve in which the connection cable (35) or its wires (47) is or are accommodated, are/is held at least partly in the control unit encapsulating body (65a-65e), in particular in the casting insulation material (67a, 67b), and/or that the cast-metal body (66a-66e) has at least two casting insulation materials (67a, 67b) with different elasticity, and/or that an area (83) of the cast-metal body (66a-66e), expediently with high elasticity, is provided for sealing the socket housing (51).

4. Socket according to any of the preceding claims, **characterised in that** the plug contacts (52) of the plug contact assembly (53) are located in a plug contact carrier (57).

5. Socket according to claim 4, **characterised in that** the plug contact carrier (57) is accommodated wholly or substantially in the control unit encapsulating body (65a-65e), or in a plug contact encapsulating body (90) separate from the former.

6. Socket according to any of the preceding claims, **characterised in that** a section of the plug contact assembly (53) facing the control unit (50) is accommodated in the control unit encapsulating body (65a-65e), and/or that at least one of the plug contacts (52) is provided with an anchoring contour (92) for anchorage to the control unit encapsulating body (65a-65e), in particular the casting insulation material (67a, 67b).

7. Socket according to any of the preceding claims, **characterised in that** the control unit (50) includes a first and at least a second module, and that the first and the second module or modules are each mounted in a control unit encapsulating body (65a-65e), in particular in the form of a cast-metal body (66a-66e).

8. Socket according to any of the preceding claims, **characterised in that** the control unit (50) has an electrical circuit board (61), in particular a multilayer board, accommodated in the control unit encapsulating body (65a-65e).

9. Socket according to any of the preceding claims, **characterised in that** the socket housing (51) has a plug contact socket, in particular in the form of a snap-in location, for the plug contact assembly (53), in particular the plug contact carrier (57), and/or that the socket housing (51) is or may be mounted on a holder (25), wherein the holder (25) expediently closes an open side or an opening (81) of the socket housing (51).

10. Socket according to any of the preceding claims, **characterised in that** the plug contact assembly (53) and the control unit (50) are linked together by flexible cable connections (58), wherein expediently the cable connections (58) include flexible contact lugs (59), in particular integral with the plug contacts (52), which make contact at assigned contact surfaces (60) to create electrical contacts with the other respective component (62).

11. Socket according to any of the preceding claims, **characterised in that** the control unit encapsulating body (65a-65e) is accommodated at least partly in the socket housing (51) and/or that the control unit encapsulating body (65a-65e) has at least one lay-on contour (70, 82) for positive contact with a wall surface (71), in particular an end wall surface or an inner wall surface, of the socket housing (51), and/or that there is provided on the control unit encapsulating body (65a-65e) at least one fastening facility (85), in particular a snap-in location and/or a snap-in projection (86) and/or a bayonet contour of a bayonet connection, for fastening to the socket housing (51).

12. Socket according to any of the preceding claims, **characterised in that** the control unit encapsulating body (65a-65e) at least partly closes an opening (81) of the socket housing (51) and/or that a cover (55) is movably mounted on the socket housing (51) to cover or close the plug-in side (54) of the plug contact assembly (53).

13. Socket according to any of the preceding claims, **characterised in that** the control unit encapsulating body (65a-65e) has at least one seating contour (72), in particular a push-through hole (78), for a mounting pin (26) which may be screwed into and/or may penetrate the socket housing (51).

14. Socket according to any of the preceding claims, **characterised in that** the control unit (50) has at least one amplifier (96) to amplify at least one signal transmitted by the vehicle electrical system (36) of the motor vehicle (16) or to be transmitted to the vehicle electrical system (36) of the motor vehicle (16), and/or a decoder (93) for decoding at least one digital signal (38) and/or an encoder (94) for coding at least one digital signal (39) and/or a bus interface (95) for a data bus (37) of the motor vehicle (16) and/or of the trailer (14), and/or a testing device for testing the electrical trailer component or components (41), in particular a lighting system (49) of the trailer (14).

## Revendications

1. Prise d'attelage (10) pour un véhicule automobile (16) avec des contacts à fiche (52) disposés dans un boîtier de prise (51) d'un ensemble de contacts à fiche (53) pour la liaison avec un câble de raccordement (35) qui est ou peut être relié à un réseau de bord (36) du véhicule automobile (16), et avec un dispositif de commande (50) électronique formant un élément intégral de la prise (20 ; 20a-20e) et qui est relié pour la commande et/ou la surveillance d'au moins un composant électrique (41) d'une remorque (14) pouvant être raccordée à la prise (20 ; 20a-20e) à au moins l'un des contacts à fiche (52), un côté d'enfichage (54) de l'ensemble de contacts à fiche (53) étant prévu pour l'enfichage d'une fiche (24) de la remorque (14), le dispositif de commande (50) étant disposé entièrement ou au moins sensiblement dans un corps blindé de commande (65a-65e) qui isole électriquement au moins une partie des composants électriques (62) du dispositif de commande (50) et entoure et blinde complètement par rapport aux influences environnementales, **caractérisée en ce qu'**une zone de bord d'un support de contacts à fiche (57) et/ou d'une carte de circuits imprimés (61) du dispositif de commande (50) dépasse du corps blindé le ou la recevant respectivement pour le maintien sur le boîtier de prise (51).

2. Prise selon la revendication 1, **caractérisée en ce que** le corps blindé de commande (65a-65e) est formé par un corps moulé (66a-66e), pour laquelle les composants (62) électriques contenus dans celui-ci du dispositif de commande (50) sont extrudés ou refondus avec un matériau d'isolation coulé (67a-67b).

3. Prise selon la revendication 2, **caractérisée en ce que** le matériau d'isolation coulé (67a, 67b) est plus mou que le boîtier de prise (51) et/ou **en ce qu'**une zone d'extrémité du câble de raccordement (35) et/ou une douille, dans laquelle le câble de raccordement (35) ou ses conduites (47) sont reçues, est reçue au moins en partie dans le corps blindé de commande (65a-65e), en particulier dans le matériau d'isolation coulé (67a-67b) et/ou **en ce que** le corps moulé (66a-66e) présente au moins deux matériaux d'isolation coulés (67a, 67b) avec une élasticité différente et/ou **en ce qu'**une zone (83) du corps moulé (66a-66e) est prévue de manière appropriée avec une élasticité élevée pour rendre étanche le boîtier de prise (51).

4. Prise selon l'une quelconque des revendications précédentes, **caractérisée en ce que** les contacts à fiche (52) de l'ensemble de contacts à fiche (53) sont disposés sur un support de contacts à fiche (57).

5. Prise selon la revendication 4, **caractérisée en ce que** le support de contacts à fiche (57) est reçu entièrement ou sensiblement dans le corps blindé de commande (65a-65e) ou un corps blindé de contacts à fiche (90) séparé.

6. Prise selon l'une quelconque des revendications précédentes, **caractérisée en ce qu'**une section tournée vers le dispositif de commande (50) de l'ensemble de contacts à fiche (53) est reçue dans le corps blindé de commande (65a-65e) et/ou **en ce que** sur au moins l'un des contacts à fiche (52), un contour d'ancrage (92) est présent pour l'ancrage sur le corps blindé de commande (65a-65e), en particulier le matériau d'isolation coulé (67a-67b).

7. Prise selon l'une quelconque des revendications précédentes, **caractérisée en ce que** le dispositif de commande (50) comporte un premier bloc et au moins un second bloc et **en ce que** le premier et l'au moins un second bloc sont respectivement disposés dans un corps blindé de commande (65a-65e) configuré en particulier comme un corps moulé (66a-66e).

8. Prise selon l'une quelconque des revendications précédentes, **caractérisée en ce que** le dispositif de commande (50) présente une carte de circuits imprimés (61) électrique reçue dans le corps blindé de commande (65a-65e), en particulier une carte multicouche.

9. Prise selon l'une quelconque des revendications précédentes, **caractérisée en ce que** le boîtier de prise (51) présente un logement de contacts à fiche configuré en particulier comme un logement d'encliquetage, pour l'ensemble de contacts à fiche (53), en particulier le support de contacts à fiche (57) et/ou **en ce que** le boîtier de prise (51) est ou peut être disposé sur un support (25), le support (25) fermant de manière appropriée un côté ouvert ou une ouverture (81) du boîtier de prise (51).

10. Prise selon l'une quelconque des revendications précédentes, **caractérisée en ce que** l'ensemble de contacts à fiche (53) est relié au dispositif de commande (50) via des liaisons de conduite flexibles (58), les liaisons de conduite (58) comportant de manière appropriée des connecteurs de contact flexibles (59) en une seule partie, en particulier avec les contacts à fiche (52) qui reposent en établissant des contacts électriques sur des surfaces de contact (60) qui leur sont associées sur l'autre composant (62) respectif.

11. Prise d'attelage selon l'une quelconque des revendications précédentes, **caractérisée en ce que** le corps blindé de commande (65a-65e) est reçu au moins en partie dans le boîtier de prise (51) et/ou **en ce que** le corps blindé de commande (65a-65e) présente au moins un contour d'appui (70, 82) pour l'appui à complémentarité de formes sur une surface de paroi (71), en particulier une surface de paroi frontale ou une surface de paroi intérieure du boîtier de prise (51) et/ou **en ce qu'**au moins un dispositif de fixation (85), en particulier un logement d'encliquetage et/ou une saillie d'encliquetage (86) et/ou un contour à baïonnette d'une liaison à baïonnette pour la fixation sur le boîtier de prise (51) est présent sur le corps blindé de commande (65a-65e).

12. Prise d'attelage selon l'une quelconque des revendications précédentes, **caractérisée en ce que** le corps blindé de commande (65a-65e) ferme au moins en partie une ouverture (81) du boîtier de prise (51) et/ou **en ce que** sur le boîtier de prise (51), un couvercle (55) est logé de manière mobile pour recouvrir ou fermer le côté d'enfichage (54) de l'ensemble de contacts à fiche (53).

13. Prise d'attelage selon l'une quelconque des revendications précédentes, **caractérisée en ce que** sur le corps blindé de commande (65a-65e), au moins un contour de réception (72) présente en particulier une ouverture traversante (78) pour un boulon de montage (26) pouvant être vissé dans le boîtier de prise (51) et/ou traversant le boîtier de prise (51).

14. Prise d'attelage selon l'une quelconque des revendications précédentes, **caractérisée en ce que** le dispositif de commande (50) présente au moins un amplificateur (96) pour l'amplification d'au moins un signal émis par le réseau de bord (36) du véhicule automobile (16) ou d'un signal à émettre au réseau de bord (36) du véhicule automobile (16) et/ou un décodeur (93) pour le décodage au moins d'un signal numérique (38) et/ou un codeur (94) pour le codage d'au moins un signal numérique (39) et/ou une interface de bus (95) pour un bus de données (37) du véhicule automobile (16) et/ou de la remorque (14) et/ou un dispositif de contrôle pour la vérification de l'au moins un composant de remorque électrique (41), en particulier d'une installation d'éclairage (49) de la remorque (14).
